# EUROPEAN PATENT APPLICATION

(11) **EP 4 807 137 A1**
(43) Date of publication of application: **16.09.2026**
(21) Application number: 26161348.3
(22) Date of filing: 27.02.2026
(51) Int. Cl.: F01D 5/14, B23K 20/12, B23K 101/00

(54) **HOLLOW FAN BLADE WITH SOLID STATE ADDITIVE MANUFACTURED COVER SKIN**

(30) Priority: 27.02.2025 US 202519065752
(71) Applicant: RTX Corporation, Farmington, CT 06032 (US)
(72) Inventor: EL-WARDANY, Tahany, East Hartford, 06118 (US); MARTINEZ, Sonia, East Hartford, 06118 (US)
(74) Representative: Dehns

(57) **Abstract**

A fan blade (20) for a gas turbine engine includes a main body (28) that extends between a leading edge (21) and a trailing edge (22). The main body (28) includes channels (30) formed into the main body (28) and a plurality of ribs (26) extending between the channels (30) and a ledge. The ledge is formed as an integral part of the main body (28) and is configured to define an outer perimeter the channels (30). A cover skin (32) is formed on and metallurgically bonded to the main body (28), including the ledge and the plurality of ribs (26) of the main body (28) using a hybrid additive manufacturing/subtractive manufacturing process. The cover skin (32) is configured to cover (32) the channels (30) and form an aerodynamic surface. The main body (28) and cover skin (32) form an airfoil (18) that extends radially outwardly from a dovetail, which is configured to permit the fan blade (20) to be attached to a fan rotor (16) of the gas turbine engine (210).

## Description

### BACKGROUND

This invention relates to a hollow fan blade and, more specifically, to a hollow fan blade having a solid state additive manufactured cover.

Some current and future aircraft gas turbine engines are designed with large fan blades to allow for high bypass ratios that promote fuel-efficient propulsion. Hollow fan blades are used for some engines to reduce the weight of the fan blades. The hollow fan blades can have a number of hollow channels, which may or may not include a light weight filler. A cover skin, which is typically adhesively bonded to a fan blade main body, encloses the hollow fan blade's hollow channels.

### SUMMARY

One aspect of this invention is directed to a fan blade for a gas turbine engine that includes a main body that extends between a leading edge and a trailing edge. The main body includes channels formed into the main body and a plurality of ribs extending between the channels and a ledge. The ledge is formed as an integral part of the main body and is configured to define an outer perimeter the channels. A cover skin is formed on and metallurgically bonded to the main body, including the ledge and the plurality of ribs of the main body, for example, using a hybrid additive manufacturing/subtractive manufacturing process. The cover skin is configured to cover the channels and form an aerodynamic surface. The main body and cover skin form an airfoil that extends radially outwardly from a dovetail, which is configured to permit the fan blade to be attached to a fan rotor of the gas turbine engine.

Another aspect of this invention is directed to a method of making a fan blade for a gas turbine engine that includes providing a main body that extends between a leading edge and a trailing edge. The main body has channels formed into the main body with a plurality of ribs that extend between the channels and a ledge. The ledge is formed as an integral part of the main body and is configured to define an outer perimeter the channels. A cover skin is formed and metallurgically bonded, for example, using a hybrid additive manufacturing/subtractive manufacturing process, to the ledge and the plurality of ribs of the main body. The cover skin is configured to cover the channels and form an aerodynamic surface. The main body and cover skin form an airfoil that extends radially outwardly from a dovetail, which is configured to permit the fan blade to be attached to a fan rotor of the gas turbine engine.

Some embodiments of the invention are as claimed in the dependent claims.

### BRIEF DESCRIPTION OF THE DRAWINGS

Fig. 1A shows an exemplary aircraft gas turbine engine.
Fig. 1B shows a fan blade according to this disclosure.
Fig. 1C is a view of the fan blade of Fig. 1B mounted in a fan rotor.
Fig. 2 is a cross-sectional view along line 2-2 of the fan blade of Fig. 1B.
Fig. 3 is an elevation view of internal structures of a fan blade of this disclosure.
Fig. 4 shows an assembled fan blade of this disclosure with a cover attached.
Fig. 5 is a block diagram of an exemplary computer numerical control (CNC) machine system useful to make a fan blade according to this disclosure.
Fig. 6A is a perspective view of an exemplary spindle attachment useful with the CNC machine system of Fig. 5.
Fig. 6B is a cross-sectional view of the spindle attachment shown in Fig. 6A taken along line B-B in Fig. 6A.

### DETAILED DESCRIPTION

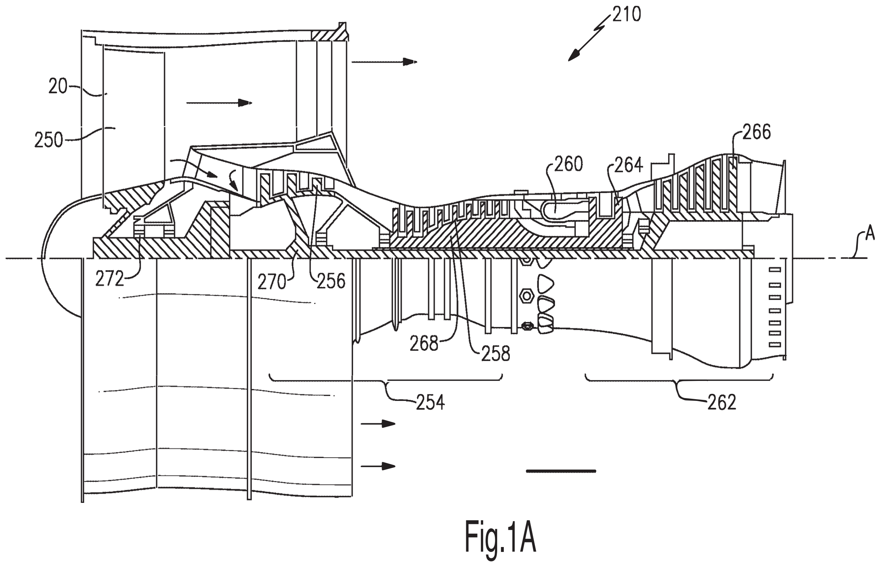

Fig. 1A shows an exemplary aircraft gas turbine engine **210.** The engine **210** includes a fan **250** with a plurality of fan blades **20,** a compressor section **254** with a low pressure compressor **256** and a high pressure compressor **258,** a combustor **260,** and a turbine section **262** with a high pressure turbine **264** and a low pressure turbine **266.** The compressor section **254,** combustor **260,** and the turbine section **262** form the engine core. The fan **250** pressurizes air, part of which bypasses the engine core to provide thrust to an aircraft to which the engine **210** is installed and the remainder enters the compressor section **254** where it is compressed and delivered into combustor **260.** In the combustor **260,** fuel mixes with the compressed air and burns to produce combustion products that pass downstream through the turbine section **262.** A high pressure turbine **264** rotates to drive the high pressure compressor **258** is via a first spool **268.** A low pressure turbine **266** rotates to drive the low pressure compressor **256** via a second spool **270.** The low pressure turbine **266** also drives the fan blades **20** of the fan **250** through a reduction gear **272,** which is coupled to the second spool **270.** Although the gas turbine engine **210** is described in the context of two spools **268, 270** and a reduction gear **272** as shown, this application applies equally to gas turbine engines that do not include a reduction gear, to single spool and three spool engines, with or without reduction gears, and gas turbine engines having alternative configurations.

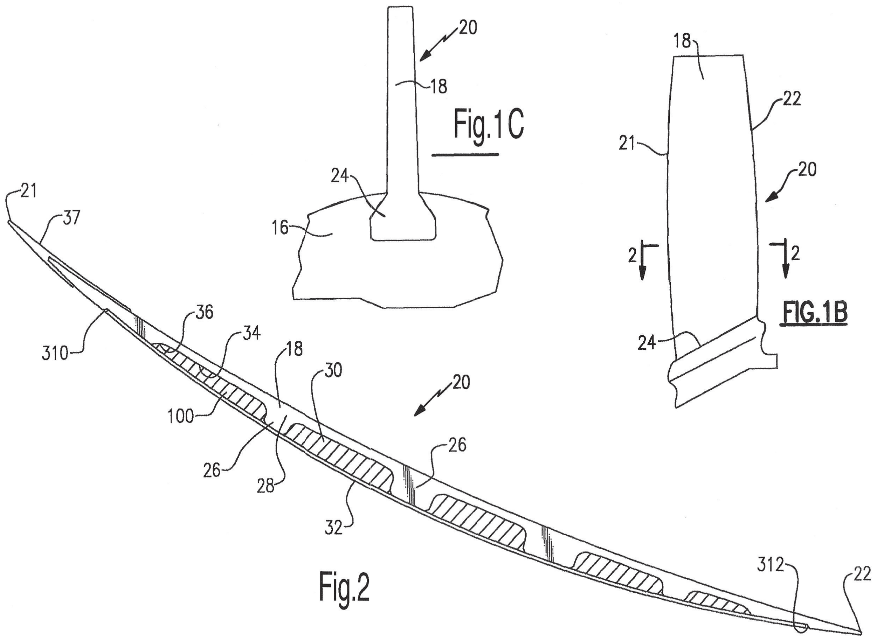

Fig. 1B shows an exemplary fan blade **20** with an airfoil **18** that extends radially outward from a dovetail **24.** The airfoil **18** includes a leading edge **21** and a trailing edge **22** that define the forward and rearward limits of the airfoil **18,** respectively. Fig. 1C shows a fan rotor **16** that is configured to receive the dovetail **24** to mount the fan blade **20** with the airfoil **18** extending radially outwardly from the fan rotor **16.**

Fig. 2 is a cross-section of the fan blade **20.** The leading edge **21** carries a sheath **37** secured to a fan blade main body **28.** The sheath **37** is configured to protect the leading edge **21** from damage and maintain a desired aerodynamic profile on the fan blade **20** leading edge **21.** A cover skin **32** closes off cavities or channels **30** in the main body **28.** The main body **28** and cover skin **32** may be formed of aluminum, aluminum alloys, titanium, titanium alloys, or any other metals or alloys deemed appropriate for a particular application. In some examples, the cover skin **32** can be made of an aluminum matrix composite having an aluminum matrix with silicon carbide particulates or nano-tubes as a reinforcing phase. The sheath **37** is typically formed of a titanium alloy to provide light weight and strength.

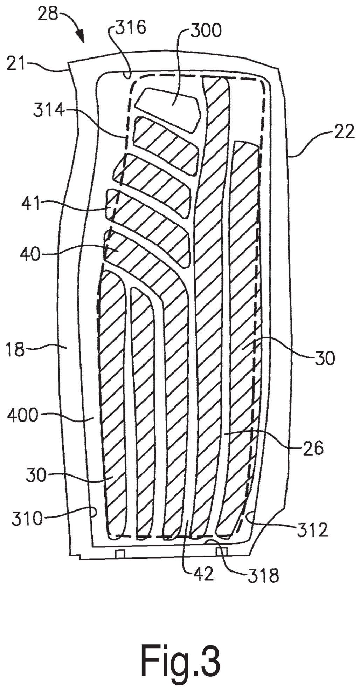

The fan blade **20** includes a plurality of ribs **26** and separate channels **30.** In some examples, a filler material **100** may be deposited within the channels **30** to dampen vibrations when the fan blade **20** is in operation. The filler material **100** can be a lighter weight material than the material used to form the main body **28.** In one example, the filler material **100** can be an aluminum foam, a titanium foam, an aluminum honeycomb, a titanium honeycomb, or other material deemed to be suitable for a particular application. In another example, a scrim layer **314** (see Fig. 3) of the material used to form the cover **32** (as described further below) can be deposited using friction surfacing additive manufacturing (FSAM) techniques as described further below over the plurality of ribs **26** and separate channels **30** instead of or in addition to the filler material **100.** The scrim layer **314** is configured to be a substrate to support formation of the cover **32** on the main body **28.**

Fig. 3 is an elevation view of the internal structures of the main body **28** that shows a plurality of channels **30** spaced from the front or leading edge **21** to the back or trailing edge **22.** Some of the channels **30** extend generally radially upwardly along the span of the fan blade **20.** Other channels, such as channel **40,** bend toward the leading edge **21.** Channel **41** extends generally from the middle of the main body **28** toward the leading edge **21.** In the example depicted in Fig. 3, channel **300** is not filled with filler material **100.** Depending on the application, any or all of the channels **30, 40, 41** may be filled or unfilled. A person of ordinary skill will recognize that in other examples, the main body **28** can include a different number of channels **30, 40, 41,** and/or channels **30, 40, 41** configured differently than as depicted in Fig. 3. As discussed above, in another example, a scrim layer **314** (shown in dashed lines Fig. 3 to depict that it is optional) can be deposited over the plurality of ribs **26** and separate channels **30, 40, 41** instead of or in addition to the filler material **100.**

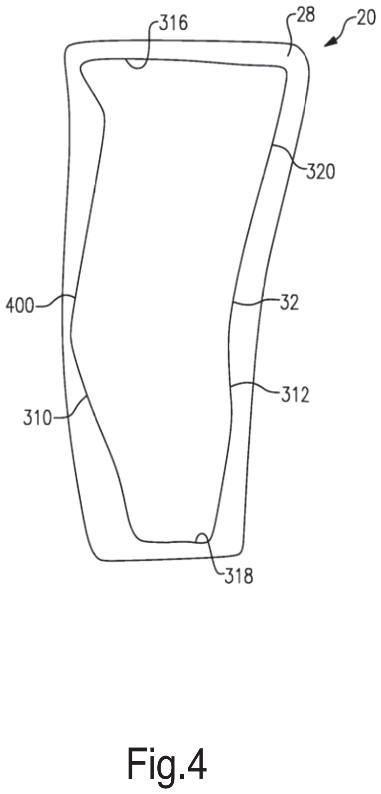

Fig. 3 shows the main body **28** including a ledge **400** defined by ledge edges **310, 312, 316,** and **318.** Edges **310** and **312** are also shown in Fig. 2 at the leading edge **21** and trailing edge **22** of the fan blade **20.** The ledge **400** is formed as an integral part of the main body and is configured to define an outer perimeter of the channels **30, 40, 41** and ribs **26, 42.** If used in a particular application, scrim layer **314** is configured to bond to the ledge and optionally to ribs **26, 42** when deposited over the main body **28.** As described further below, the cover **32** is configured to bond to the ledge **400,** scrim layer **314** (if used), and ribs **26, 42** when the fan blade **20** is finished. Fig. 4 shows a finished fan blade **20** with the cover skin **32** secured to the main body **28** of the fan blade **20.**

The cover **32** can be made using a solid-state additive manufacturing (AM) process to deposit a layer of material onto the main body **28** of the fan blade **20** followed by a high-speed machining process to finish the cover skin **32** to the desired dimension, features, and surface finish. As described further below, the cover **32** bonds to the ledge **400** and ribs **26** and is configured to enclose the channels **30, 40, 41** and to provide an aerodynamic surface for the fan blade **20** when finished. The solid-state AM process can be a friction surfacing AM (FSAM) process as described in more detail below. The FSAM process is based on the plastic deformation of a metallic consumable rod. In one example, the rod is placed in a tool holder that is attached to a milling machine spindle. Frictional heat between the rod and a substrate (e.g., the main body **28** of the fan blade **20**) generates a viscoplastic boundary layer at the rod tip. The pressure and temperature conditions of the FSAM process lead to an interdiffusion process that creates a metallic bond (i.e., metallurgic bonding) between the plasticized material from the rod and the substrate (e.g., the ledge **400** and ribs **26, 42** of the main body **28**). The FSAM process can be used to produce desired geometry and microstructural gradients in the deposited layer (e.g., the cover skin **32**) as a function of rotating speed, rod linear feed and applied normal load. The deposited layer (e.g., the cover skin **32**) can be machined after deposition using another tool holder in the same tooling magazine of the milling machine. The result is a hybrid additive/subtractive (machining) process that creates, secures, and finishes the cover skin **32** on the main body **28** to form a finished fan blade **20.** Appropriate selection of materials, FSAM deposition parameters, and machining parameters enables the manufacture of a substantially defect-free finished fan blade **20** with controlled microstructural gradients and desired mechanical properties, including hardness of the cover skin **32.** The interfacial shear strength of the cover skin **32** metallically bonded to the ledge **400** and ribs **26** of the main body **28** is equivalent to or better than the bulk shear strength of the blade that can be obtained with previous adhesive bonding methods.

As discussed above, in some examples, a scrim layer **314** can be formed on the main body before formation of the cover skin **32** as described above and below. The scrim layer **314** can also be formed using a FSAM process as described further below to metallically bond the scrim layer **314** to at least the ledge **400** and optionally to the ribs **26.** The scrim layer **314,** which can be made from the same material as the cover skin **32,** is configured to be a substrate upon which the cover skin **32** is built. In some examples, the scrim layer **314** can be between 0.0127 mm and 2.0 mm thick or any other thickness deemed appropriate for a particular application. Consistent with the further description below, the FSAM process used to form the scrim layer **314** can include one or more deposition path strategies including but not limited to oscillation, zigzag, and contour-based approaches. Depending on the thickness of the scrim layer **314,** it may be desirable to provide for uniform cooling and residual stress management after deposition to avoid unwanted distortion.

The FSAM process is controlled to prevent the deposited material from melting so the deposition material does not undergo a phase transformation. This allows the microstructure gradient in the deposit to be controlled as a function of the rotating speed, rod linear feed, and applied normal load used during material deposition. The geometrical tolerance and surface finish of the final product is achieved by milling the deposited surface. The FSAM process can produce substantially porosity-free layers with high interfacial bond strength. In some examples, the FSAM process can deposit > two (2) mm layer thickness on a substrate area of 813 mm x 203 mm in twenty-four (24) minutes with a feed rate of 254 mm/min and with a rod diameter of 25.4 mm and possible overlap of 1.27 mm if needed. Using a high-speed machining approach, the spindle speed can be twenty-five thousand (25,000) RPM, five (5) mm axial depth of cut, and a chip load of five tenths (0.05) mm/tooth with a three (3) tooth end mill. The machining time for the different features on the surface is less than twenty (20) minutes.

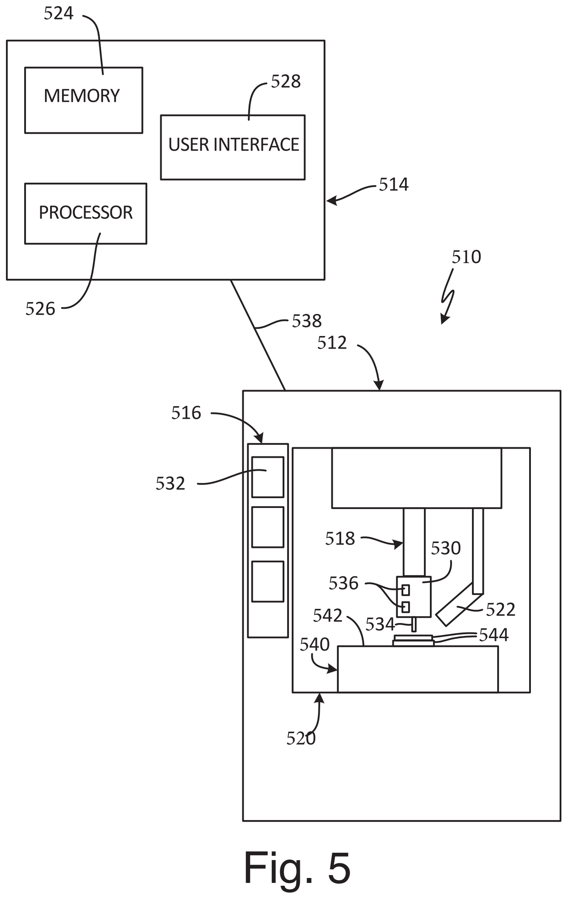

Fig. 5 is a block diagram of exemplary machine system **510** that can be used to implement a FASM process as discussed above. Machine system **510** includes computer numerical control (CNC) machine **512** and computer **514.** CNC machine **512** includes tool magazine **516,** machine spindle **518,** work area **520,** and heating element **522.** Computer **514** includes memory **524,** processor **526,** and user interface **528.** Tool bank **516** stores subtractive attachments **532** when not in use and can also store additive attachment **530** when not in use. Additive attachment **530** includes wire **534** and sensors **536.**

Computer **514** communicates with CNC machine **512** via communication link **538.** Communication link **538** can be a wired or wireless connection, and it is understood that computer **514** can be integrated into CNC machine **512** or disposed separately from CNC machine **512.** Processor **526,** in one example, is a digital logic circuit capable of executing software or other instructions, for example, stored in memory **524.**

Memory **524,** in some examples, can be configured to store information during operation of computer **514.** Memory **524,** in some examples, is computer-readable storage media. In some examples, the computer-readable storage media can include a non-transitory medium, and in some examples can include a volatile medium. In some examples, memory **524** is configured to store program instructions for execution by processor **526.**

User interface **528,** such as a keyboard, touchscreen, monitor, mouse, or other suitable interface device, allows a user to interact with machine system **510,** such as by retrieving information from memory **524,** receiving notifications, initiating the software stored in memory **524,** and inputting additional information to memory **524,** among other examples. User interface **528** can also be configured to provide an output of information to the user. For example, user interface **528** can include a sound card, a video graphics card, a speaker, a display device, or other type of device for outputting information in a form understandable to users or machines.

CNC machine **512** is an automated, multi-axis machine tool used to shape workpiece **540** (e.g., cover **32** as deposited onto main body **28**) into a desired configuration (e.g., finished fan blade **20**). CNC machine **512** can be a 3-axis machine, a 5-axis machine, or any other desired configuration, for example. Workpiece **540** is housed in work area **520**, and CNC machine **512** can use additive attachment **530** and subtractive attachments **532** to deposit workpiece **540** and to shape workpiece **540** into the desired configuration. Substrate **542** (e.g., main body **28**) is the portion of workpiece **540** onto which layers of material are deposited during the FSAM process.

Tool magazine **516** can store additive attachment **530** and subtractive attachments **532** when not in use. Both additive attachment **530** and subtractive attachments **532** can be connected to and powered by machine spindle **518** and are configured to shape workpiece **540** into the desired configuration. Additive attachment **530** can be configured to add layers **542** of material, such as from wire **534**, to substrate **542** through a FSAM process. Sensors **536** can be disposed in or relative to additive attachment **530** and can be configured to sense various operating characteristics of additive attachment **530**, such as an applied load, a temperature of wire **534**, or any other desired characteristic. Wire **534** can be of any suitable material for applying to substrate **542** through the FSAM process. For example, as discussed above, wire **534** can be aluminum, aluminum alloys, titanium, titanium alloys, or any other metal or alloy deemed appropriate for a particular application. In some examples, the wire can be a hollow wire or rod of aluminum filled with silicon carbide particulates or nano-tubes that will create an aluminum matrix composite when deposited. Wire **534** can be of any desired cross-sectional shape, such as a circle, square, triangle, or any other suitable shape.

Subtractive attachments **532** can remove material from workpiece **540** with any appropriate subtractive manufacturing process, such as through grinding, milling, drilling, or any other substrative manufacturing process deemed appropriate for a particular application. Machine spindle **518** can use both additive attachment **530** and multiple subtractive attachments **532** from tool bank **516,** and machine spindle **518** can automatically attach to and detach from both additive attachment **530** and subtractive attachments **532.** As such, CNC machine **512** is configured to shape workpiece **540** utilizing various machining attachments and methods.

During an FSAM process, a sacrificial wire or rod of deposition material, such as wire **534,** is rotated relative to a substrate, such as substrate **542,** and is applied to the substrate with a desired pressure. Friction between the deposition material and the substrate generates heat. The temperature and pressure are controlled, such as by computer **514,** to prevent the deposition material from melting and undergoing a phase change. Instead, the heat builds to an FSAM setpoint, which is typically about 70%-90% of the melting point of the deposition material. The FSAM setpoint can be any suitable temperature for plasticizing the deposition material and for providing desired properties at an interface between individual layers, such as layers **544,** and at an interface between individual layers and the substrate. Plasticizing the deposition material generates a viscoelastic boundary layer at the tip of the sacrificial wire. The sacrificial wire is then traversed across the substrate and deposits a layer of deposition material on the substrate.

The temperature and pressure conditions during the FSAM process lead to an interdiffusion process resulting in a metallurgic bond between the plasticized material and the substrate (e.g., the ledge **400** and ribs **26** of the main body **28**) to form the cover **32.** Because the sacrificial wire does not melt, the sacrificial wire does not undergo a phase transformation and the microstructure gradient of the deposited wire material on the substrate can thus be controlled as a function of the rotational speed, the applied load, and the traverse speed. FSAM thus enables the generation of substantially defect-free parts with high interfacial shear strength and a controlled microstructure gradient that enhances the mechanical hardness of components produced using FSAM. A heating element, such as heating element **522,** can be used to preheat the sacrificial wire such that less friction and pressure are required to raise the temperature of the sacrificial wire to the FSAM setpoint.

During operation, information regarding the desired configuration of workpiece **540** is input into computer **514,** such as via user interface **528,** and can be stored in memory **524.** Processor **526** can execute the instructions stored in memory **524** to cause CNC machine **512** to shape the workpiece **540.** Workpiece **540** is placed in work area **520** and CNC machine **512** is activated. Computer **514** instructs CNC machine **512** to select additive attachment **530** or subtractive attachments **532** from tool bank **516.** CNC machine **512** maneuvers machine spindle **518** and machine spindle **518** attaches to additive attachment **530** or subtractive attachment **532.** Machine spindle **518** powers the selected one of additive attachment **530** and subtractive attachments **532** to deposit material and/or shape workpiece **540.**

During operation to deposit material onto substrate **542,** computer **514** instructs CNC machine **512** to select additive attachment **530.** Machine spindle **518** drives the rotation of additive attachment **530** and positions additive attachment **530** relative to substrate **542.** Additive attachment **530** is lowered and wire **534** contacts substrate **542.** Machine spindle **518** applies a load to additive attachment **530** thereby applying pressure to wire **534** on substrate **542.** When the temperature and pressure of wire **534** are at the FSAM setpoint, which can be sensed by sensors **536,** machine spindle **518** traverses relative to workpiece **540** to deposit layers **544** of wire **534** material onto substrate **542.** Computer **514** controls the rotational speed of additive attachment **530,** the load applied, and the traverse speed of machine spindle **518** relative to workpiece **540.**

The microstructure of the layers **544** of wire **534** deposited on substrate **542** can be altered by controlling, for example, the rotating speed, the traverse speed, and the applied load. Sensors **536** can provide feedback to computer **514** to allow computer **514** to adjust the operating parameters of machine spindle **518** to thereby control the properties of layers **544.** In some examples, sensors **536** can sense the applied load, the heat generated by the FSAM process, the temperature of wire **534,** and the pressure on wire **534,** among other parameters. Sensors **536** can communicate the information to computer **514** or can use the information to control various internal components within additive attachment **530.** The material of wire **534** and the material of substrate **542** can be stored in memory **524** and computer **514** can control additive attachment **530** to provide a desired microstructure. For example, computer **514** can be loaded with instructions that, when executed by processor **526,** cause CNC machine **512** to alter the rotating speed, traverse speed, and applied load to produce a boundary layer with the desired material properties in the deposition zone.

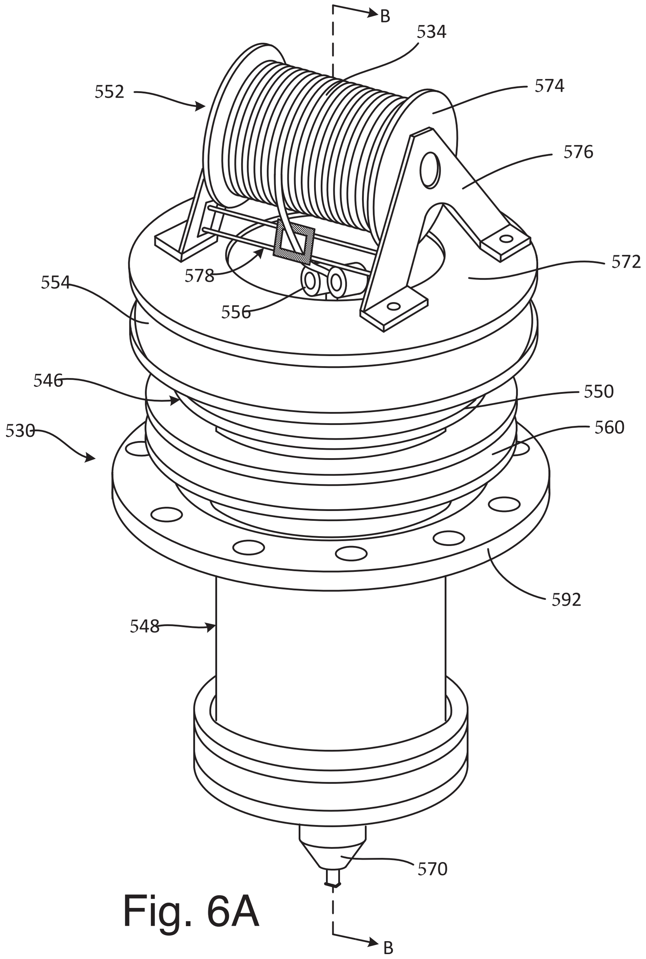

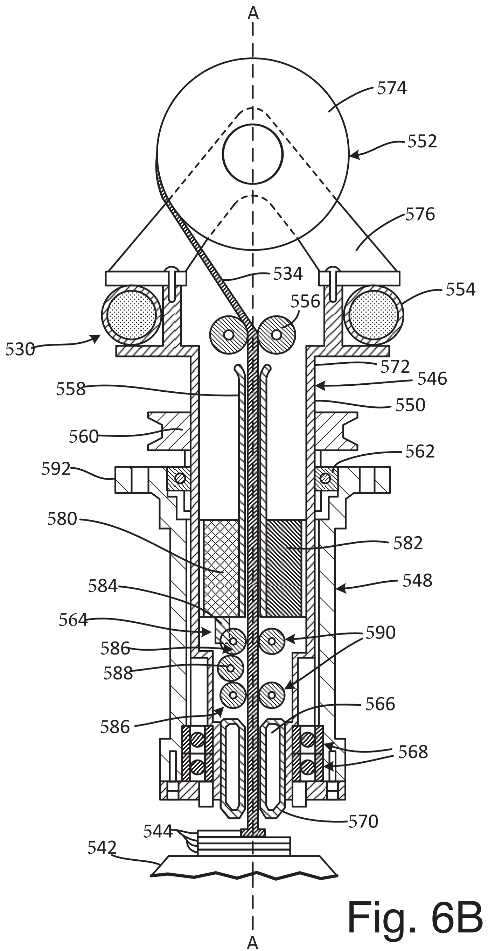

Fig. 6A is a perspective view of additive attachment **530.** Fig. 6B is a cross-sectional view of additive attachment **530** taken along line B-B in Fig. 6A. Figs. 6A and 6B will be discussed together. Additive attachment **530** includes wire **534,** rotating assembly **546,** and static assembly **548.** Rotating assembly **546** includes spindle **550,** material supply **552,** balance ring **554,** guide wheels **556,** guide tube **558,** drive pulley **560,** bearing **562,** wire feeder **564,** cooling jacket **566,** and angular bearings **568.** Spindle **550** includes application tip **570** and upper portion **572.** Material supply **552** includes reel **574,** mount bracket **576,** and follower **578.** Wire feeder **564** includes motor **580,** balance weight **582,** transmission gear **584,** feeder wheels **586,** intermediate gear **588,** and idler wheels **590.** Static assembly **548** includes mounting flange **592.**

Rotating assembly **546** is rotatably mounted on static assembly **548.** Mounting flange **592** extends radially from static assembly **548** and can be used to attach additive attachment **530** to a machine for use. Spindle **550** extends through static assembly **548,** and application tip **570** projects out of a lower end of static assembly **548.** Bearing **562** is disposed between spindle **550** and static assembly **548** and supports rotating assembly **546** for rotation relative to static assembly **548.** In some examples, bearing **562** radially supports spindle **550** relative to axis A-A, but it is understood that bearing **562** can provide radial support, axial support, or both. Angular bearings **568** are disposed between spindle **550** and static assembly **548,** with angular bearings **568** disposed proximate application tip **570** of spindle **550.** Angular bearings **568** can provide both radial and axial support to spindle **550.** Balance ring **554** is mounted on spindle **550** below material supply **552** and is configured to absorb vibrations experienced by additive attachment **530,** thereby minimizing any adverse effects that can be caused by the vibrations. Drive pulley **560** is mounted on spindle **550** and can receive a device, such as a belt, chain, clamp, or any other suitable device for rotating drive pulley **560** and thus for driving the rotation of rotating assembly **546.**

Material supply **552** is mounted on upper portion **572** of spindle **550** outside of static assembly **548.** Mount bracket **576** is connected to upper portion **572** of spindle **550,** and reel **574** is rotatably supported by mount bracket **576.** Similarly, follower **578** is mounted on mount bracket **576,** and follower **578** is configured to guide wire **534** between reel **574** and guide wheels **556.** Wire **534** wraps around reel **574** and extends from reel **574,** through follower **578,** and into spindle **550.** Wrapping wire **534** on reel **574** provides a feedstock of wire **534** for use throughout the FSAM process, such that the FSAM process does not require stopping and starting to reload additive attachment **530** with additional wire **534.** Material supply **552** provides continuous feeding of wire **534** throughout the FSAM process to allow for uninterrupted deposition of layers **544** of wire **534** on substrate **542.**

Guide wheels **556** are disposed in upper portion **572** of spindle **550.** Guide tube **558** is disposed within spindle **550** and aligned on axis A-A. Guide wheels **556** align wire **534** within spindle **550** as wire **534** enters spindle **550** from material supply **552.** Guide tube **558** maintains the alignment of wire **534** within spindle **550** as wire **534** travels between guide wheels **556** and feeder wheels **586.**

Wire feeder **564** is disposed within spindle **550** and configured to control the feed of wire **534** through spindle **550.** Motor **580** is mounted within spindle **550** and transmission gear **584** is connected to and powered by motor **580.** In some examples motor **580** is an electric motor. In some examples, motor **580** is connected to and controlled by computer **514** (shown in Fig. 5). Balance weight **582** is disposed on an opposite side of spindle **550** from motor **580** and is configured to offset a mass of motor **580** to balance spindle **550** during rotation. Transmission gear **584** is connected to and driven by motor **580.** Transmission gear **584** meshes with feeder wheels **586** and provides rotational power to feeder wheels **586.** Transmission gear **584** can be of any suitable configuration for transmitting power to feeder wheels **586,** such as a worm gear, toothed gear, or any other gear deemed suitable for a particular application. While motor **580** is described as providing rotational power through transmission gear **584,** it is understood that motor **580** can provide rotational power in any desired manner, such as through a direct connection with one or more feeder wheels **586** or through any desired form of intermediate gear. In some examples, wire feeder **564** includes multiple, intermeshed feeder wheels **586.** Where wire feeder **564** includes multiple feeder wheels **586,** it is understood that wire feeder **564** can include intermediate gears, such as intermediate gear **588,** between feeder wheels **586** to ensure that feeder wheels **586** all rotate in the same direction. Rotating feeder wheels **586** in the same direction allows feeder wheels **586** to exert a downward force on wire **534** to ensure that wire **534** is properly positioned and adequately fed for application throughout any FSAM process. Idler wheels **590** are disposed on an opposite side of wire **534** from feeder wheels **586** and are configured to ensure wire **534** engages feeder wheels **586.**

Feeder wheels **586** can engage wire **534** to pull wire **534** through spindle **550** and to resist torquing of wire **534** due to the friction generated between wire **534** and substrate **542.** Feeder wheels **586** pull wire **534** from reel **574** and provide wire **534** at tip **570** throughout the FSAM process, thereby ensuring that a continuous supply of wire **534** is available throughout the FSAM process. In some examples, feeder wheels **586** can include teeth to engage wire **534.** In some examples, feeder wheels **586** and idler wheels **590** can include intermeshed teeth such that rotation of feeder wheels **586** drives the rotation of idler wheels **590,** with wire **534** passing between feeder wheels **586** and idler wheels **590** and engaging a second set of teeth. It is understood, however, that feeder wheels **586** can engage wire **534** in any suitable manner. Feeder wheels **586** engaging wire **534** also provides torque resistance to wire **534** to prevent wire **534** from torquing due to the friction experienced in the FSAM process. Limiting any torquing of wire **534** to the distance between substrate **542** and feeder wheels **586** prevents wire **534** from being damaged by excess torque. Idler wheels **590** maintain the engagement of wire **534** and feeder wheels **586.**

Cooling jacket **566** is disposed proximate to tip **570** of spindle **550.** After exiting wire feeder **564** wire **534** extends through cooling jacket **566** and exits spindle **550** through tip **570.** Cooling jacket **566** can be filled with a cooling substance, such as water, and is positioned to dissipate the heat radiating from wire **534** during the FSAM process. As discussed above, wire **534** is heated to near the melting point of wire **534,** such as about 70%-90% of the melting point of wire **534,** during the FSAM process. Cooling jacket **566** prevents the heat in wire **534** from radiating into additive attachment **530,** which could cause damage to various components of additive attachment **530.**

During operation, additive attachment **530** is positioned relative to substrate **542** and spindle **550** is driven to rotate on axis A-A and to apply a layer of wire **534** material on substrate **542.** Wire feeder **564** pulls wire **534** from reel **574** and through spindle **550** to position wire **534** outside of tip **570** and into the deposition zone near substrate **542.** With spindle **550** rotating on axis A-A, additive attachment **530** is lowered towards substrate **542** and wire **534** is applied to substrate **542** with a desired pressure.

Wire feeder **564** continuously provides additional wire **534** for deposition onto substrate **542.** Feeder wheels **586** drive wire **534** towards tip **570** to assist in maintaining the pressure of wire **534** on substrate **542.** Feeder wheels **586** pull wire **534** from reel **574** and position the end of wire **534** at tip **570** such that the end of wire **534** is near substrate **542** and positioned to add layers **544** of wire **534** to substrate **542.** The feed rate of wire **534** is controlled by motor **580,** which supplies rotational power to feeder wheels **586** through transmission gear **584.** Transmission gear **584** drives feeder wheels **586,** and feeder wheels **586** pull wire **534** from reel **574,** through guide wheels **556** and guide tube **558,** and push wire **534** out of spindle **550** through tip **570.**

The friction and pressure applied to wire **534** cause heat to build at the tip of wire **534.** The heat builds until the temperature reaches the FSAM setpoint. Additive attachment **530** traverses substrate **542,** and layers **544** of wire **534** are deposited on substrate **542.** To generate the heat required to plasticize wire **534** for application during the FSAM process, additive attachment **530** can include a heating element, such as heating element **522** (shown in Fig. 5). The heating element can raise the temperature of wire **534** such that less friction and pressure are required to raise the temperature of wire **534** to the FSAM setpoint. In one example, additive attachment **530** can include an in-situ heating element, such as by conducting electricity through one of feeder wheels **586** or idler wheels **590,** to pre-heat wire **534** for application. In some examples, a heating element is disposed outside of additive attachment **530** and focuses energy in the deposition zone to provide additional heat to wire **534.** When the temperature of wire **534** reaches the FSAM setpoint, layers **544** can be deposited on substrate **542** through the continued application of pressure and by traversing wire **534** across substrate **542.** Layers **544** can be stacked on substrate **542** and can be machined into a final desired form using one or more subtractive attachments **532** as discussed above.

For example, the FSAM process described above can deposit an aluminum, aluminum alloy, titanium, or titanium alloy layer of 1 mm to 4 mm thick to form the cover **32** on the main body **28** using an aluminum, aluminum alloy, titanium, or titanium alloy consumable wire or rod of 25.4 mm diameter using the CNC milling machine **510.** The CNC milling marching **510** will continuously feed the wire or rod as it is deposited on the surface of the main body **28.** The wire or rod can have a rotational speed of about 3000 RPM and can be fed in an axial direction to apply a normal force of about 890 N at the start of contact with the main body **28.** As the process advances the normal forces will be reduced to about 445 N. This load will generate a contact pressure of 2.48 MPa which can be withstand by filler material **100** filling channels **30, 40, 41** in the main body **28.** Frictional heat generated at the interface between the wire or rod and the main body **28** forms a viscoplastic boundary layer at the wire or rod tip that results in an interdiffusion process that creates a metallic bond between the plasticized deposition material and the ledge **400** and ribs **26** of the main body **28.** The FSAM process can deposit layers that are more than 0.1 mm thick on a substrate area of 813 mm x 203 mm in 24 minutes with a feed rate of 254 mm/min and with a step over or an overlap of 1.27 mm between the deposited tracks. Using a high-speed machining approach the deposited layer that forms the cover **32** can be machined to the desired geometrical tolerance and surface finish, for example, with a spindle speed of 24,000 RPM, 1 mm axial depth of cut, and a chip load of 0.05 mm/tooth with 3 teeth end mill. The machining time for the different features on the surface can be less than 24 minutes, resulting in a total production time of 2 to 3 hours, including setup.

This disclosed FSAM method for a cover skin **32** of aluminum or titanium onto a main body **28** provides an number of benefits over the previous process of securing the cover skin **32** to the main body **28** using adhesives, including but not limited to:
- Providing a cost-effective, substantially defect-free manufacturing and assembly process for a hollow fan blade **20** cover skin **32** that integrates manufacturing and assembly in a single process, thereby reducing material waste, energy consumption, and production time.
- Enhancing material joining capability for the cover skin **32** by enabling joining of dissimilar materials, such as aluminum and other lightweight alloys, with superior strength and precision.
- Enhancing microstructural control of the cover skin **32** to improve the mechanical properties (e.g., fatigue and shear strength) compared to previous methods.
- Reducing or eliminating the need for post-processing (e.g., machining or finishing) as a result of the FSAM process precision and accuracy during the deposition and bonding.
- Integrating advanced cooling/pre-heating techniques during the FSAM process to enhance the quality of the interdiffusion and reduce thermal distortion, which is particularly important for the complex geometries of hollow fan blades **20.**
- Providing flexibility to deposit a cover skin **32** of either titanium or aluminum alloy cover skin on the filler material **100** filling channels **30, 40, 41** (e.g., an aluminum foam, a titanium foam, an aluminum honeycomb, or a titanium honeycomb) in the main body **28.** In some examples, the cover skin **32** can an aluminum matrix composite having an aluminum matrix with silicon carbide particles or nanotubes as a reinforcing phase.

### Discussion of Possible Embodiments

The following are non-exclusive descriptions of possible embodiments of the present invention.

A fan blade for a gas turbine engine includes a main body that extends between a leading edge and a trailing edge. The main body includes channels formed into the main body and a plurality of ribs extending between the channels and a ledge. The ledge is formed as an integral part of the main body and is configured to define an outer perimeter the channels. A cover skin is formed on and metallurgically bonded to the main body, including the ledge and the plurality of ribs of the main body, for example, using a hybrid additive manufacturing/subtractive manufacturing process. The cover skin is configured to cover the channels and form an aerodynamic surface. The main body and cover skin form an airfoil that extends radially outwardly from a dovetail, which is configured to permit the fan blade to be attached to a fan rotor of the gas turbine engine.

The fan blade of the preceding paragraph can optionally include, additionally and/or alternatively, any one or more or all of the following features, configurations and/or additional elements:
At least one of the plurality of channels is filled with a filler material.

The filler material is made from a lighter weight material than the material used to form the main body.

The filler material is an aluminum foam, a titanium foam, an aluminum honeycomb, or a titanium honeycomb
The main body and cover skin are formed from aluminum, an aluminum alloy, titanium, or a titanium alloy.

The cover skin is formed from an aluminum matrix composite having an aluminum matrix with silicon carbide particles or nanotubes as a reinforcing phase
The hybrid additive manufacturing/subtractive manufacturing process includes a friction surfacing additive manufacturing (FSAM) process.

The cover skin is 1 mm to 4 mm thick.

A scrim layer is metallically formed on and metallurgically bonded to the main body before the cover skin is metallically formed on and metallurgically bonded to the main body, wherein the scrim layer is formed on and bonded to the ledge, for example, using a hybrid additive manufacturing/subtractive manufacturing process, and is configured to be a substrate upon which the cover skin is built.

The scrim layer is aluminum, an aluminum alloy, titanium, or a titanium alloy.

Another aspect of this invention is directed to a method of making a fan blade for a gas turbine engine that includes providing a main body that extends between a leading edge and a trailing edge. The main body has channels formed into the main body with a plurality of ribs that extend between the channels and a ledge. The ledge is formed as an integral part of the main body and is configured to define an outer perimeter the channels. A cover skin is formed and metallurgically bonded, using a hybrid additive manufacturing/subtractive manufacturing process, to the ledge and the plurality of ribs of the main body. The cover skin is configured to cover the channels and form an aerodynamic surface. The main body and cover skin form an airfoil that extends radially outwardly from a dovetail, which is configured to permit the fan blade to be attached to a fan rotor of the gas turbine engine.

The method of the preceding paragraph can optionally include, additionally and/or alternatively, any one or more or all of the following features, configurations and/or additional elements:
Further including machining, using the hybrid additive manufacturing/subtractive manufacturing process, the cover skin after the cover skin is formed and metallically bonded to the main body, optionally to provide a desired geometrical tolerance and surface finish to the cover skin.

Further including filling at least one of the plurality of channels with a filler material before the cover skin is formed and metallically bonded to the main body.

The filler material is made from a lighter weight material than the material used to form the main body.

The filler material is an aluminum foam, a titanium foam, an aluminum honeycomb, or a titanium honeycomb
The main body and cover skin are formed from aluminum, an aluminum alloy, titanium, or a titanium alloy.

The cover skin is formed from an aluminum matrix composite having an aluminum matrix with silicon carbide particles or nanotubes as a reinforcing phase
The hybrid additive manufacturing/subtractive manufacturing process includes a friction surfacing additive manufacturing (FSAM) process.

The cover skin is 1 mm to 4 mm thick.

Further comprising forming and metallurgically bonding, using a hybrid additive manufacturing/subtractive manufacturing process, a scrim layer to the main body before the cover skin is metallically formed on and metallurgically bonded to the main body, wherein the scrim layer is configured to be a substrate upon which the cover skin is built.

While the invention has been described with reference to an exemplary embodiment(s), it will be understood by those skilled in the art that various changes may be made and equivalents may be substituted for elements thereof without departing from the scope of the invention. **In** addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A fan blade (20) for a gas turbine engine (210) comprising:
a main body (28) that extends between a leading edge (21) and a trailing edge (22), wherein the main body (28) includes channels (30) formed into the main body (28) and a plurality of ribs (26) extending between the channels (30) and a ledge (400) and wherein the ledge (400) is formed as an integral part of the main body (28) and is configured to define an outer perimeter of the channels (30); and
a cover skin (32) metallically formed on and metallurgically bonded to the main body (28), wherein the cover skin (32) is formed on and bonded to the ledge (400) and the plurality of ribs (26) of the main body (28), using a hybrid additive manufacturing/subtractive manufacturing process, and is configured to cover (32) the channels (30) and form an aerodynamic surface, wherein the main body (28) and cover skin (32) form an airfoil (18) that extends radially outwardly from a dovetail (24), and the dovetail (24) is configured to permit the fan blade (20) to be attached to a fan rotor (16) of the gas turbine engine (210).

2. The airfoil (18) of claim 1, wherein at least one of the plurality of channels (30) is filled with a filler material (100), optionally wherein the filler material (100) is made from a lighter weight material than the material used to form the main body (28).

3. The airfoil (18) of claim 2, wherein the filler material (100) is an aluminum foam, a titanium foam, an aluminum honeycomb, or a titanium honeycomb

4. The airfoil (18) of any preceding claim, wherein the main body (28) and cover skin (32) are formed from aluminum, an aluminum alloy, titanium, or a titanium alloy.

5. The airfoil (18) of any preceding claim, wherein the cover skin (32) is formed from an aluminum matrix composite having an aluminum matrix with silicon carbide particles or nanotubes as a reinforcing phase

6. The airfoil (18) of any preceding claim, wherein the hybrid additive manufacturing/subtractive manufacturing process includes a friction surfacing additive manufacturing (FSAM) process.

7. The airfoil (18) of any preceding claim, wherein a scrim layer (314) is metallically formed on and metallurgically bonded to the main body (28) before the cover skin (32) is metallically formed on and metallurgically bonded to the main body (28), wherein the scrim layer (314) is formed on and bonded to the ledge (400) using a hybrid additive manufacturing/subtractive manufacturing process and is configured to be a substrate upon which the cover skin (32) is built, optionally wherein the scrim layer (314) is aluminum, an aluminum alloy, titanium, or a titanium alloy.

8. A method of making a fan blade (20) for a gas turbine engine (210) comprising:
providing a main body (28) that extends between a leading edge (21) and a trailing edge (22) having channels (30) formed into the main body (28) with a plurality of ribs (26) extending between the channels (30) and a ledge (400) wherein the ledge (400) is formed as an integral part of the main body (28) and is configured to define an outer perimeter the channels (30); and
forming and metallurgically bonding, using a hybrid additive manufacturing/subtractive manufacturing process, a cover skin (32) to the main body (28), wherein the cover skin (32) is formed on and bonded to the ledge (400) and the plurality of ribs (26) of the main body (28) and is configured to cover (32) the channels (30) and form an aerodynamic surface, wherein the main body (28) and cover skin (32) form an airfoil (18) that extends radially outwardly from a dovetail, and the dovetail is configured to permit the fan blade (20) to be attached to a fan rotor (16) of the gas turbine engine (210).

9. The method of claim 8, further comprising machining, using the hybrid additive manufacturing/subtractive manufacturing process, the cover skin (32) after the cover skin (32) is formed and metallically bonded to the main body (28) to provide a desired geometrical tolerance and surface finish to the cover skin (32).

10. The method of claim 8 or 9, further comprising filling at least one of the plurality of channels (30) with a filler material (100) before the cover skin (32) is formed and metallically bonded to the main body (28), wherein the filler material (100) is made from a lighter weight material than the material used to form the main body (28).

11. The method of claim 10, wherein the filler material (100) is an aluminum foam, a titanium foam, an aluminum honeycomb, or a titanium honeycomb.

12. The method of any of claims 8 to 11, wherein the main body (28) and cover skin (32) are formed from aluminum, an aluminum alloy, titanium, or a titanium alloy.

13. The method of any of claims 8 to 11, wherein the cover skin (32) is formed from an aluminum matrix composite having an aluminum matrix with silicon carbide particles or nanotubes as a reinforcing phase.

14. The method of any of claims 8 to 13, wherein the hybrid additive manufacturing/subtractive manufacturing process includes a friction surfacing additive manufacturing (FSAM) process.

15. The method of any of claims 8 to 14, further comprising forming and metallurgically bonding, using a hybrid additive manufacturing/subtractive manufacturing process, a scrim layer (314) to the main body (28) before the cover skin (32) is metallically formed on and metallurgically bonded to the main body (28), wherein the scrim layer (314) is configured to be a substrate upon which the cover skin (32) is built.
